# EUROPEAN PATENT SPECIFICATION

(11) **EP 3 085 589 B1**
(45) Date of publication and mention of the grant of the patent: **05.06.2019**
(21) Application number: 16166351.3
(22) Date of filing: 21.04.2016
(51) Int. Cl.: B60T 7/20, B60T 8/17, B60T 13/68, B60T 15/20

(54) **VALVE ASSEMBLY**
VENTILANORDNUNG
DISPOSITIF DE VANNE

(30) Priority: 21.04.2015 IT MO20150087
(43) Date of publication of application: 26.10.2016
(73) Proprietor: SAFIM S.p.A., 41123 Modena (IT)
(72) Inventor: Mamei, Eronne, 41123 Modena (IT); Mamei, Enrico, 41123 Modena (IT); Mamei, Andrea, 41123 Modena (IT)
(74) Representative: Zoli, Filippo

(56) References cited:
- DE-A1- 2 243 472
- FR-A1- 2 897 580

## Description

The present invention relates to a valve assembly, particularly for the control of the braking of a trailer.

As known, to date the towing vehicles are connected to their trailer by means of a connecting device comprising a male joint associated with the towing vehicle and a relative female joint associated with the trailer.

More particularly, such a connecting device allows to put the braking system of the towing vehicle in communication with that of the trailer, so that the braking of the towing vehicle operated by the operator also causes the braking of the towed trailer.

The braking system of the trailer is therefore driven by the braking system of the tractor in order to synchronize the braking forces acting on the same.

Some recently introduced regulations establish that the connecting device between the towing vehicle and its trailer has a pair of male joints able to be inserted inside a pair of relative female joints as well as an electrical connection to control the braking system of the trailer and to transmit to the towing vehicle any alarm signals from the trailer itself.

In particular, the female joints are connectable to a control line able to supply the braking system of the trailer and to an additional line able to deactivate the automatic and/or parking brake of the trailer itself, respectively.

FR 2 897 580 A1 discloses a valve assembly for trailers comprising a first and a second female joint connectable to a first and to a second male joint respectively associated with the towing vehicle, where the first female joint is communicating with a control line of the braking system of the trailer itself and where the second female joint is communicating with at least an additional line acting on the parking and/or automatic brake of the trailer. The valve assembly comprises a by-pass line communicating with a drain line, and valve means provided to put the additional line into communication with the by-pass line as a result of the exit of the second male joint from the second male joint.

The main aim of the present invention is to provide a single valve assembly, connectable to the female joints of the trailer, which is able to perform several safety or emergency functions.

Within this aim, one object is to allow the emergency braking of the trailer by means of a hydraulic accumulator.

Another object of the present invention is to allow the release of the pressures along the control line and the additional line of the trailer when the latter is detached from the towing vehicle so as to allow the subsequent insertion of the male joints inside the relative female joints. Another object of the present invention is to provide a valve assembly which allows to overcome the mentioned drawbacks of the prior art within the ambit of a simple, rational, easy, effective to use and affordable solution.

The above mentioned objects are achieved by the present valve assembly according to claim 1.

Other characteristics and advantages of the present invention will become better evident from the description of a preferred, but not exclusive, embodiment of a valve assembly, illustrated by way of an indicative, but non-limiting, example in the accompanying drawings, wherein:

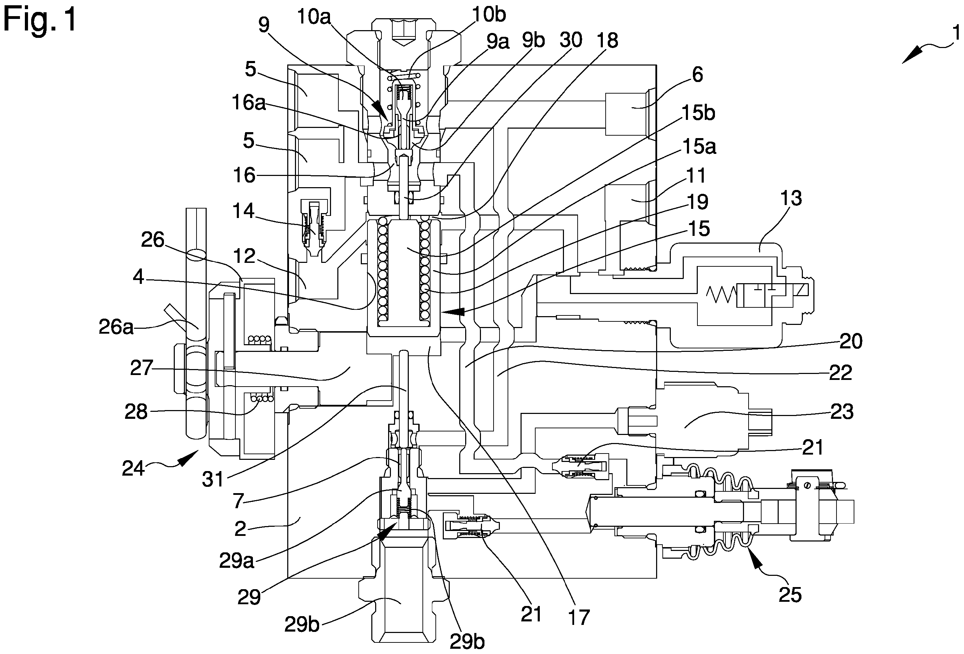

Figure 1 is a sectional view of a valve assembly according to the invention with the command means in neutral position and the activation element in normal operating position;

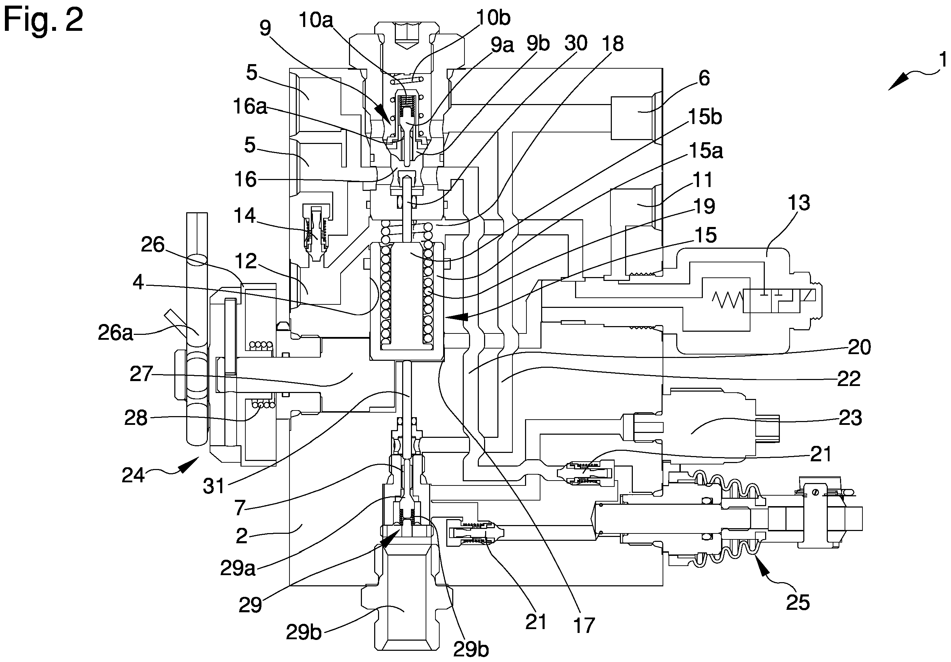

Figure 2 is a sectional view of the valve assembly of Figure 1 with the command means in neutral position and the activation element in emergency position;

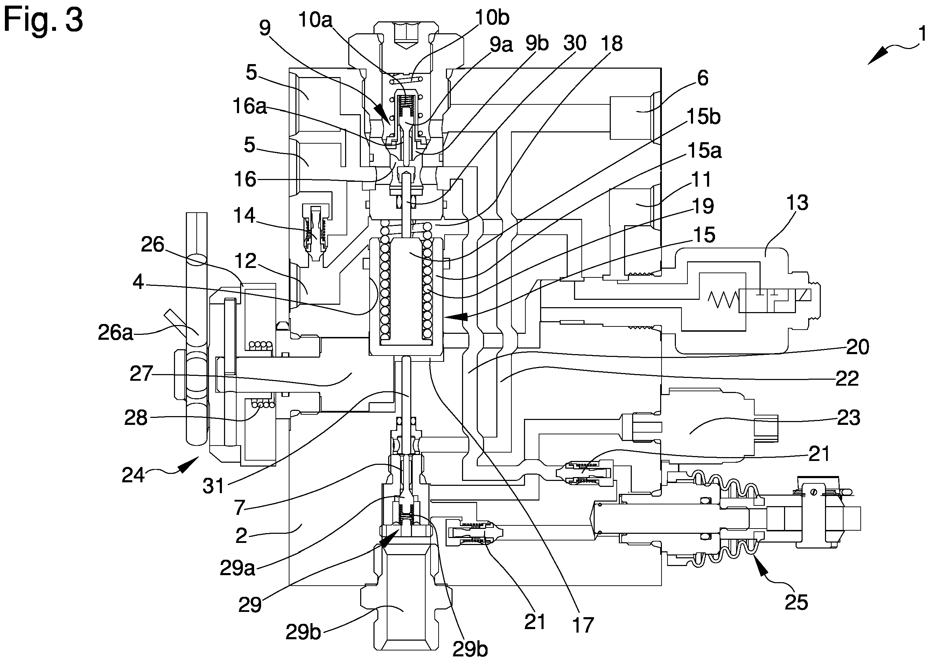

Figure 3 is a sectional view of the valve assembly of Figure 1 with the command means in the first work position;

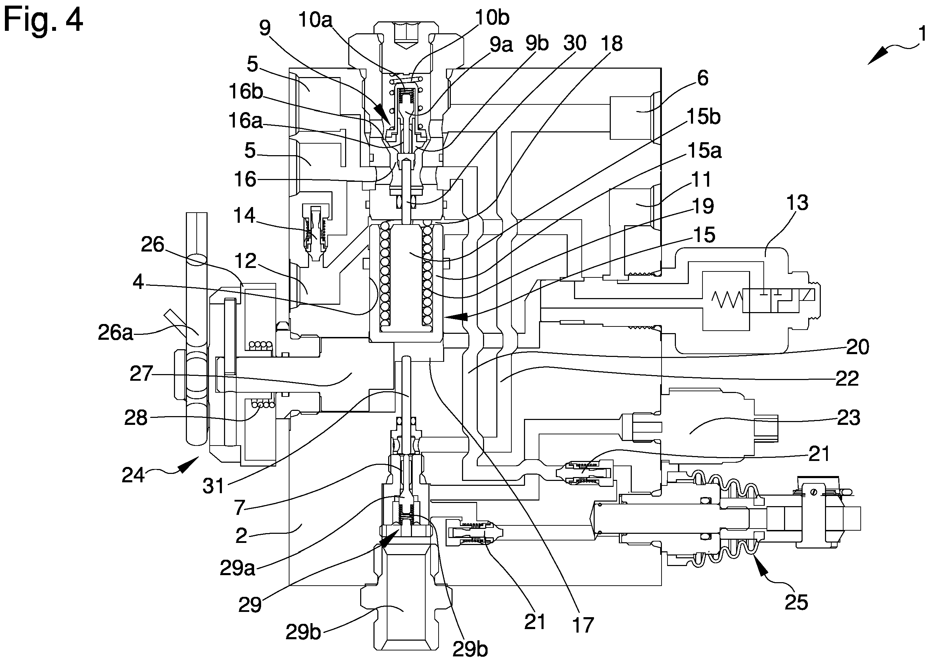

Figure 4 is a sectional view of the valve assembly of Figure 1 with the command means in the second work position.

With particular reference to such figures, reference number 1 globally designates a valve assembly connectable to a trailer comprising a first and a second female joint (not shown in the figures) in turn connectable to a first and to a second male joint (also not shown in the figures) respectively, associated with the towing vehicle. More in detail the first female joint is communicating with a control line, able to receive a work fluid at a first pressure as a result of the connection to the first male joint for the power supply of the braking system of the trailer, and the second female joint is communicating with at least an additional line, able to receive a work fluid at a second pressure as a result of the connection of the second female joint to the second male joint to control the parking and/or automatic brake of the trailer itself, and to at least a bypass line communicating with a discharge line. Valve means are also provided able to put the additional line in communication with the bypass line as a result of the exit of the second male joint from the second female joint.

The assembly 1 comprises a body 2 inside which are defined: at least a control channel 5 connectable to the control line of the trailer, at least a braking channel 6 connectable to the braking line of the trailer, and at least a connection channel 16 able to put the control channel 5 in communication with the braking channel 6 and along which are placed first valve means 9 able to permit/prevent the flow of the work fluid along the connection channel itself. More particularly, the first valve means 9 are movable between at least a closed position and at least an open position wherein they prevent and permit, respectively, the flow of the work fluid along the connection channel 16.

Advantageously, the first valve means 9 comprise at least a first and a second shutter 9a and 9b able to obstruct a first and a second passage channel 16a and 16b respectively, of the work fluid inside the connection channel 16 and intended to be moved in sequence to their respective open positions. Both shutters 9a and 9b have a respective closed position, wherein they obstruct their passage channel 16a, 16b, and a respective open position, wherein they allow the flow of the work fluid.

More particularly, the first shutter 9a is slidably inserted within the second shutter 9b, the latter being hollow and defining the first passage channel 16a, moves towards the open position in contrast to first elastic means 10a and protrudes, in its closed position, from the top of the second shutter itself. The second shutter 9b, in turn, rests, in its closed position, against the body 2, so that the second passage channel 16b is positioned outside of the first passage channel 16a. The second shutter 9b moves in contrast to the second elastic means 10b.

Conveniently, the section of the first passage channel 16a is smaller than that of the second passage channel 16b.

In the body 2 are also defined: at least a supply channel 7 connected to a hydraulic accumulator, between which are interposed second valve means 29 able to put in communication/isolate the supply channel 7 with/from the accumulator.

More in detail, the second valve means 29 comprise a shutter 29a movable between a closed configuration and an open configuration, wherein it prevents and allows, respectively, the outflow of the work fluid from the accumulator towards the supply channel 7, and elastic means 29b able to counteract the displacement of the shutter 29a towards the open configuration.

Moreover, in the body 2 are also defined at least a connecting channel 22 able to put the supply channel 7 in communication with the braking channel 6, and at least an auxiliary channel 20 able to put the control channel 5 in communication with the accumulator and along which are arranged one-way valve means 21 able to prevent the flow of the work fluid from the accumulator to the control channel itself.

In the body 2 are further defined at least an additional channel 11, connectable to the additional line of the trailer, and at least a discharge channel 12, connectable to the discharge line of the trailer. More particularly, the additional channel 11 is connectable to the additional line of the trailer for the deactivation of the parking and/or automatic brake of the trailer itself and the discharge channel 12 can be connectable to a tank, of the dynamic type or not, or without further connections. As mentioned above, the discharge channel 12 is intended to be put in communication with the additional channel 11, through the bypass channel of the second female joint, as a result of the exit of the second male joint from the relative second female joint.

Conveniently, the discharge channel 12 is communicating with the control channel 5 and between them is interposed at least a one-way valve 14, which is able to prevent the flow of the work fluid from the control channel 5 towards the discharge channel 12.

According to the invention, the valve assembly 1 then comprises at least an activation element 15 housed in a sliding manner inside a seat 4 defined in the body 2 and able to interact with the first and second valve means 9 and 29.

The activation element 15 is then interposed between the first and second valve means 9, 29 and on it act a first thrust chamber 17, facing to the side of the second valve means 29, and a second thrust chamber 18, arranged on the opposite side of the first thrust chamber 17 with respect to the activation element itself and, consequently, facing to the side of the first valve means 9. Elastic means 19 are also provided able to act on the activation element 15 towards the first thrust chamber 17. In other words, the elastic means 19 push the activation element 15 in contrast to the force exerted on the same by the first thrust chamber 17. The elastic means 19 are therefore arranged inside the second thrust chamber 18.

In the particular embodiment shown in the figures, the thrust areas of the activation element 15 on which act the first and the second thrust chamber 17 and 18 are substantially equivalent to each other.

The first and second thrust chambers 17 and 18 are connectable to at least one of the additional channel 11 and the discharge channel 12.

The valve assembly 1 also comprises a solenoid valve 13, connectable to the power supply of the towing vehicle, and connected to the additional channel 11, to the discharge channel 12 and to the thrust chambers 17 and 18.

The solenoid valve 13 is movable between at least an inactive configuration, wherein the first and second thrust chambers 17 and 18 are communicating with each other, and at least an active configuration, wherein the first thrust chamber 17 is connected to the additional channel 11 and the second thrust chamber 18 is connected to the discharge channel 12.

In the preferred embodiment shown in the figures, the second thrust chamber 18 is put in communication with the discharge channel 12 and the solenoid valve 13 is interposed between the first thrust chamber 17, the second thrust chamber 18 and the additional channel 11. In its active configuration the solenoid valve 13 puts the first thrust chamber 17 in communication with the additional channel 11 isolating the first thrust chamber 17 from the second thrust chamber 18, while in its inactive configuration the solenoid valve 13 puts the first thrust chamber 17 in communication with the second thrust chamber 18 isolating the first thrust chamber 17 from the additional channel 11.

Alternative embodiments cannot however be ruled out wherein the first thrust chamber 17 is put in communication with the additional channel 11 and the solenoid valve 13 is interposed among the first thrust chamber 17, the second thrust chamber 18 and the discharge channel 12, and wherein in its inactive configuration the solenoid valve 13 puts the second thrust chamber 18 in communication with the first thrust chamber 17, and therefore with the additional channel 11, isolating the second thrust chamber from the discharge channel 12, and an active configuration, wherein the solenoid valve 13 puts the second thrust chamber 18 in communication with the discharge channel 12, isolating the second thrust chamber from the additional channel 11.

The solenoid valve 13 is positioned in the inactive configuration as a result of the decoupling of the trailer from the towing vehicle or if the latter does not send any electrical signal to the trailer itself. Advantageously, between the activation element 15 and the first valve means 9 is interposed at least a first interaction element 30, e.g. of the cylinder type.

Similarly, between the activation element 15 and the second valve means 29 is interposed at least a second interaction element 31, e.g. of the cylinder type.

Preferably, the activation element 15 comprises a first thrust element 15a, e.g. of the glass-shaped type and able to cooperate with the second interaction element 31, and a second thrust element 15b, housed inside the first thrust element 15a and able to cooperate with the first interaction element 30. The elastic means 19 are interposed between the first and the second thrust elements 15a, 15b. The activation element 15 is movable between at least a normal operating position and an emergency position. The normal operating position corresponds to the condition wherein the male joints are inserted inside the relative female joints, the solenoid valve 13 is in the active configuration, and wherein the additional channel 11 is pressurized and isolated from the discharge channel 12.

In this position, the activation element 15 moves in contrast to the elastic means 19 due to the pressure in the first thrust chamber 17, the second thrust chamber 18 being connected to the discharge channel 12. The second thrust chamber 18 can be released in the control channel 5, by means of the one-way valve 14, in the event of this being at a lower pressure than that in the discharge channel 12, e.g. as a result of the interruption of the braking in the towing vehicle.

It follows that the activation element 15, moving towards the normal operating position, interacts with the first valve means 9 so as to open the connection channel 16 and then connect the control channel 5 to the braking channel 6.

More in detail, the activation element 15 interacts in sequence with the first and with the second shutter 9a, 9b, through the first interaction element 30, thus opening the first passage channel 16a and, subsequently, the second passage channel 16b.

The first interaction element 30 is then pushed by the activation element 15 towards the first valve means 9 so as to move in sequence the first and the second shutter 9a, 9b to their respective open positions in contrast to the elastic means 10a, 10b.

The accumulator is charged when the pressure of the work fluid along the control channel 5 is higher than that found in the accumulator itself. An auxiliary channel 20 is communicating on one side with the control channel 5 and on the other side with the accumulator, and along which one-way valve means 21 are arranged able to prevent the flow of the work fluid from the accumulator towards the control channel 5, by means of which one part of the work fluid that flows through the control channel itself is conveyed into the accumulator. Conveniently, a pressure switch 23 is also connected to the accumulator.

Advantageously, the assembly 1 also comprises an electric device (not shown in the figures) operatively connected to the pressure switch, to the solenoid valve 13 and to the power supply of the towing vehicle and able to maintain the solenoid valve 13 in the active configuration until the pressure in the accumulator reaches a predefined value.

In the preferred embodiment shown in the figures, the auxiliary channel 20 is directly put in communication with the accumulator.

Alternative embodiments cannot however be ruled out wherein the auxiliary channel 20 is put in communication with the supply channel 7 and the work fluid incoming from the same enters inside the accumulator and seeps through the second valve means 29.

The activation element 15 then reaches the emergency position as a result of the drop in pressure in the additional channel 11 (e.g. due to the operation of the parking brake of the towing vehicle) or of the connection of the latter with the discharge channel 12 (e.g. due to the exit of the second male joint from the second female joint) or of the displacement of the solenoid valve 13 to the inactive configuration, the activation element itself is moved by the elastic means 19 towards the second valve means 29 to allow the outflow of the work fluid from the accumulator into the supply channel 7 and from the latter into the braking channel 6 through the connecting channel 22. In this operating condition, in fact, either the pressure in the first thrust chamber 17 resets (operation of the parking brake of the towing vehicle) or it is substantially equivalent to that in the second thrust chamber 18 (exit of the second male joint from the second female joint), whereby the only action exerted on the activation element 15 is that of the elastic means 19.

More in detail, the displacement of the activation element 15 towards the emergency position causes the displacement of the second interaction element 31, which interacts with the shutter 29a of the second valve means 29, moving it to its open position.

In this emergency position, the first valve means 9 are in the closed position, isolating the control channel 5 from the braking channel 6.

The work fluid contained in the accumulator then flows out through the supply channel 7 and supplies the braking system of the trailer by means of the braking channel 6.

It can be understood that, as a result of the activation of the solenoid valve 13, the first thrust chamber 17 is put in communication with the additional channel 11 and is isolated from the discharge channel 12, consequently the activation element 15 is pushed in contrast to the elastic means 19 moving to the normal operating position.

In the passage from the emergency position to the normal operating position, and vice versa, both the first and the second valve means 9, 29 are in the closed position. More in detail, when the activation element 15 is arranged against one of the first and the second interaction element 30 and 31 it is spaced at the same time from the other of the second and the first interaction element 31 and 30.

Advantageously, the assembly 1 comprises manual command means 24, which are operable to command the displacement of the activation element 15 to at least a predefined position. The command means 24 are able to be operated as a result of the exit of the male joints from the relative female joints.

More particularly, the command means 24 are movable between a neutral position, wherein the activation element 15 is free to move between the normal operating position and the emergency position, and at least a first work position, wherein the activation element 15 is pushed in contrast to the elastic means 19, starting from the emergency position it takes on as a result of the connection between the additional channel 11 and the discharge channel 12 following the exit of the male joints from the female joints, and wherein both the first and the second valve means 9 and 29 are in the closed position.

Preferably, the assembly 1 comprises pumping means 25 positioned along the auxiliary channel 20 and operable, with the command means 24 in the first work position, to aspirate the work fluid in the control channel 5 and send it inside the accumulator.

It is easy to appreciate that the pumping means 25 are also able to aspirate the work fluid along the additional channel 11 in the event of the latter being put in communication with the discharge channel 12 as a result of the exit of the second male joint from its second female joint; as mentioned above, in fact, the discharge channel 12 is communicating with the control channel 5.

Conveniently, the pumping means 25 are of the manual type and are interposed between the one-way valve means 21, which comprise at least two one-way valves able to permit the aspiration of the work fluid from the control channel 5 and the sending thereof towards the accumulator but not vice versa.

Advantageously, the command means 24 are also movable to a second work position, wherein the activation element 15 is pushed further in contrast to the elastic means 19 with respect to the first work position causing the opening of the first valve means 9 and, then, putting the control channel 5 in communication with the braking channel 6.

In this second work position of the command means 24, the pumping means 25 are also operable to aspirate the work fluid along the braking channel 6, still passing through the control channel 5, and send it inside the accumulator.

In the preferred embodiment shown in the figures, the command means 24 comprise at least an actuation element 26, of the type of a knob, positioned outside of the body 2 and movable in rotation with respect to it, where such knob 26 is connected to a cam element 27 which interacts with the activation element 15.

More particularly, the command means 24 also comprise a safety element 26a associated with the actuation element 26 and connectable to the towing vehicle. In the event of the command means 24 being arranged in the second work position and the trailer detaching from the towing vehicle, the safety element 26a is displaced so as to move the command means 24 to their neutral position so that the activation element 15 is pushed by the elastic means 19 to the emergency position causing the first valve means 9 to close and the second valve means 29 to open and the consequent braking of the trailer. This is particularly useful if the towing vehicle is without the line connectable to the additional line of the trailer. Suitably, further elastic means 28 are provided associated with the command means 24 and able to exert a torque on them, in contrast to the displacement of the command means themselves from the neutral position towards the aforementioned work positions.

More in detail, the further elastic means 28 are the type of a pin spring having a first pin (not visible in detail in the figures) locked together with the body 2 and a second pin (not visible in detail in the figures) locked together with the actuation element 26, the second pin being able to return to the initial position as a result of the rotation of the actuation element itself.

It follows, therefore, that if the operator leaves unintentionally the command means 24 in the first or in the second work position even as a result of the insertion of the male joints inside the relative female joints (and therefore of the activation of the solenoid valve 13), due to the pressure in the additional channel 11, the activation element 15 is further moved as far as reaching the end-of-stroke position corresponding to the normal operating position and thus releasing the command means 24 which, due to the action exerted by the further elastic means 28, return to their neutral position.

It has in practice been observed how the described invention achieves the intended objects and in particular the fact is underlined that the assembly according to the invention allows to supply the braking system of a trailer under emergency conditions by means of a hydraulic accumulator.

The valve assembly making the subject of the present invention also allows to release easily the pressure along the various lines of the trailer, i.e. along the control, the additional and the braking lines, so as to allow the subsequent connection of the male joints to the relative female joints.

## Claims

1. Valve assembly (1), particularly for trailers comprising a first and a second female joint connectable to a first and to a second male joint respectively, associated with the towing vehicle, where the first female joint is communicating with a control line of the braking system of the trailer itself and where the second female joint is communicating with at least an additional line acting on the parking and/or automatic brake of the trailer, the valve assembly comprising at least a bypass line communicating with a discharge line, and valve means able to put the additional line in communication with the bypass line as a result of the exit of the second male joint from the second female joint, **characterized by** the fact that it comprises:
- a body (2) wherein are defined:
o at least a control channel (5) connectable to said control line of the trailer;
o at least a braking channel (6), connectable to the braking system of the trailer;
o at least a connection channel (16) interposed between said control channel (5) and said braking channel (6) and along which are placed first valve means (9) to allow/prevent the flow of the work fluid along the connection channel itself;
o at least a supply channel (7) connected to a hydraulic accumulator, second valve means (29) being provided to put in communication/isolate said supply channel (7) with/from said accumulator;
o at least a connecting channel (22) to put said supply channel (7) in communication with said braking channel (6);
o at least an auxiliary channel (20) to put said control channel (5) in communication with said accumulator and along which are arranged one-way valve means (21) to prevent the flow of fluid from the accumulator towards the control channel itself;
o at least an additional channel (11) connectable to said additional line of the trailer;
o at least a discharge channel (12) connectable to said discharge line of the trailer;
- at least an activation element (15) housed in a sliding manner inside a seat (4) defined in said body (2), interposed between said first and second valve means (9, 29) and on which act, on opposite sides of the same, at least a first thrust chamber (17) facing to the side of said second valve means (29) and a second thrust chamber (18) facing to the side of said first valve means (9), elastic means (19) are also provided able to act on the activation element to push it towards said first thrust chamber (17), said first and second thrust chambers (17, 18) being connectable to at least one of said additional channel (11) and said discharge channel (12);
- at least a solenoid valve (13) connectable to the power supply of the towing vehicle and connected to said additional channel (11), to said discharge channel (12) and to said first and second thrust chambers (17, 18), said solenoid valve (13) being movable between at least an inactive configuration, wherein said first and second thrust chambers (17, 18) are communicating with each other, and at least an active configuration, wherein said first thrust chamber (17) is communicating with said additional channel (11) and said second thrust chamber (18) is communicating with said discharge channel (12);
- said activation element (15) being movable between at least:
o a normal operating position, corresponding to the operating condition wherein said additional channel (11) is pressurized and said solenoid valve (13) is in the active configuration, and wherein the activation element itself moves in contrast to the force exerted by said elastic means (19) and interacts with said first valve means (9) to put said braking channel (6) in communication with said control channel (5), the latter supplying said accumulator by means of said auxiliary channel (20) with said second valve means (29) in the closed position;
o and an emergency position, corresponding to the operating condition wherein takes place a drop in pressure in said additional channel (11) or the connection of the latter with said discharge channel (12) as a result of the exit of the second male joint from its second female joint or of the displacement of said solenoid valve (13) to the inactive position, and wherein the activation element itself interacts with said second valve means (29) to allow the outflow of the work fluid from said accumulator to said supply channel (7) and from this to said braking channel (6) through said connecting channel (22), and wherein said first valve means (9) are in the closed position isolating said control channel (5) from said braking channel (6).

2. Valve assembly (1) according to claim 1, **characterized by** the fact that in the passage from the emergency position to the normal operating position of said activation element (15) both the first and the second valve means (9, 29) are in the closed position.

3. Valve assembly (1) according to claim 1 or 2, **characterized by** the fact that it comprises at least a first interaction element (30) interposed between said activation element (15) and said first valve means (9), said activation element (15), in the displacement to the normal operating position, being able to push said first interaction element (30) towards said first valve means (9) to move the latter to the open position.

4. Valve assembly (1) according to one or more of the preceding claims, **characterized by** the fact that it comprises at least a second interaction element (31) interposed between said activation element (15) and said second valve means (29), said activation element (15), in the displacement to the emergency position, being able to push said second interaction element (31) towards the second valve means (29) to move the latter to the open position.

5. Valve assembly (1) according to claims 3 and 4, **characterized by** the fact that when said activation element (15) rests against one of said first and said second interaction elements (30, 31) it is spaced from the other of said second and said first interaction element (31, 30).

6. Valve assembly (1) according to one or more of the preceding claims, **characterized by** the fact that said first valve means (9) comprise at least a first and a second shutter (9a, 9b) able to obstruct a first and a second passage channel (16a, 16b) respectively, of the work fluid along said connection channel (16), said activation element (15) being able to move in sequence said first and second shutter (9a, 9b) to their respective open positions during the displacement thereof towards the normal operating position.

7. Valve assembly (1) according to claim 6, **characterized by** the fact that said first shutter (9a) is slidably inserted within said second shutter (9b), the latter being hollow and defining said first passage channel (16a), and protrudes, in its closed position, from the top of the second shutter itself, said first interaction element (30) being able to contact, in sequence, said first and said second shutter (9a, 9b) during the displacement of the activation element (15) towards the normal operating position.

8. Valve assembly (1) according to one or more of the preceding claims 6 and 7, **characterized by** the fact that said second shutter (9b) rests, in its closed position, against said body (2), said second passage channel (16b) being positioned outside of said first passage channel (16a).

9. Valve assembly (1) according to one or more of the preceding claims, **characterized by** the fact that said activation element (15) comprises a first thrust element (15a), with a glass shape and able to cooperate with said second interaction element (31), and a second thrust element (15b) housed inside said first thrust element (15a) and able to cooperate with said first interaction element (30), said elastic means (19) being interposed between said first and said second thrust element (15a, 15b).

10. Valve assembly (1) according to one or more of the preceding claims, **characterized by** the fact that it comprises manual command means (24) operable to command the displacement of said activation element (15) to at least a predefined position inside said seat (4).

11. Valve assembly (1) according to claim 10, **characterized by** the fact that said command means (24) are movable between a neutral position, wherein said activation element (15) is free to move between said normal operating position and said emergency position, and at least a first work position wherein, starting from the emergency position, said activation element (15) is pushed in contrast to said elastic means (19), and wherein said first and said second valve means (9, 29) are in the closed position.

12. Valve assembly (1) according to claim 11, **characterized by** the fact that it comprises pumping means (25) positioned along said auxiliary channel (20) and operable, with said command means (24) in the first work position, to aspirate the work fluid in said control channel (5) and to send it to said accumulator; said pumping means (25) being also able to aspirate the work fluid in said additional channel (11) in the event of the latter being put in communication with said discharge channel (12) as a result of the exit of the second male joint from its second female joint, said discharge channel (12) being in communication with said control channel (5).

13. Valve assembly (1) according to one or more of claims 10 to 12, **characterized by** the fact that said command means (24) are also movable to a second work position, wherein said activation element (15) is pushed further in contrast to said elastic means (19) with respect to said first work position and said first valve means (9) are in the open position.

14. Valve assembly (1) according to claim 13, **characterized by** the fact that, with said command means (24) in the second work position, said pumping means (25) are operable to aspirate the work fluid along said braking channel (6) by means of said control channel (5) and to send it to said accumulator.

15. Valve assembly (1) according to one or more of the preceding claims 10 to 14, **characterized by** the fact that said command means (24) comprise at least an actuation element (26) positioned outside of said body (2), connected to a cam element (27) interacting with said activation element (15) and operable to move the command means themselves from the neutral position to at least one of said work positions and vice versa.

## Patentansprüche

1. Ventilbaugruppe (1), insbesondere für Anhänger, die ein erstes und ein zweites weibliches Verbindungsstück umfasst, das mit einem ersten und einem zweiten männlichen Verbindungsstück verbindbar ist, das dem Zugfahrzeug zugeordnet ist, wobei das erste weibliche Verbindungsstück mit einer Steuerleitung des Bremssystems des Anhängers selbst verbunden ist und wobei das zweite weibliche Verbindungsstück mit mindestens einer zusätzlichen Leitung verbunden ist, die auf die Feststell- und/oder automatische Bremse des Anhängers wirkt, die Ventilbaugruppe umfassend
mindestens eine Bypassleitung, die mit einer Auslassleitung verbunden ist, und Ventilmittel, die in der Lage sind, die zusätzliche Leitung als Folge des Austritts des zweiten männlichen Verbindungsstücks aus dem zweiten weiblichen Verbindungsstück in Verbindung mit der Bypassleitung zu bringen, **dadurch gekennzeichnet, dass** sie umfasst:
- einen Körper (2), in dem definiert sind:
∘ mindestens ein Steuerkanal (5), der mit der Steuerleitung des Anhängers verbindbar ist;
∘ mindestens ein Bremskanal (6), der mit dem Bremssystem des Anhängers verbindbar ist;
∘ mindestens ein Verbindungskanal (16), der zwischen dem Steuerkanal (5) und dem Bremskanal (6) angeordnet ist und entlang dem erste Ventilmittel (9) angeordnet sind, um den Fluss des Arbeitsfluids entlang des Verbindungskanals selbst zu ermöglichen/verhindern ;
∘ mindestens ein Zuführkanal (7), der mit einem Hydrospeicher verbunden ist, wobei zweite Ventilmittel (29) vorgesehen sind, um den Zuführkanal (7) mit dem Speicher in Verbindung zu setzen/zu trennen;
∘ mindestens ein Verbindungskanal (22), um den Zuführkanal (7) in Verbindung mit dem Bremskanal (6) zu bringen;
∘ mindestens ein Hilfskanal (20), um den Steuerkanal (5) in Verbindung mit dem Speicher zu bringen, und entlang dessen Einwegventilmittel (21) angeordnet sind, um den Fluidstrom von dem Speicher zu dem Steuerkanal selbst zu verhindern;
∘ mindestens ein zusätzlicher Kanal (11), der mit der zusätzlichen Leitung des Anhängers verbindbar ist;
∘ mindestens ein Auslasskanal (12), der mit der Auslassleitung des Anhängers verbindbar ist;
- mindestens ein Aktivierungselement (15), das gleitend in einem in dem Körper (2) definierten Sitz (4) untergebracht ist, zwischen den ersten und zweiten Ventilmitteln (9, 29) angeordnet ist und auf das auf gegenüberliegenden Seiten derselben mindestens eine erste Schubkammer (17), die der Seite der zweiten Ventilmittel (29) zugewandt ist, und eine zweite Schubkammer (18), die der Seite der ersten Ventilmittel (9) zugewandt ist, wirken, wobei auch elastische Mittel (19) vorgesehen sind, die in der Lage sind, auf das Aktivierungselement einzuwirken, um es in Richtung der ersten Schubkammer (17) zu drücken, wobei die ersten und zweiten Schubkammern (17, 18) mit mindestens einem von den zusätzlichen Kanälen (11) und dem Auslasskanal (12) verbindbar sind;
- mindestens ein Magnetventil (13), das mit der Energieversorgung des Zugfahrzeugs verbindbar ist und mit dem zusätzlichen Kanal (11), dem Auslasskanal (12) und den ersten und zweiten Schubkammern (17, 18) verbunden ist, wobei das Magnetventil (13) beweglich ist zwischen mindestens einer inaktiven Konfiguration, wobei die ersten und zweiten Schubkammern (17, 18) miteinander verbunden sind, und mindestens einer aktiven Konfiguration, wobei die erste Schubkammer (17) mit dem zusätzlichen Kanal (11) verbunden ist und die zweite Schubkammer (18) mit dem Auslasskanal (12) verbunden ist;
- wobei das Aktivierungselement (15) beweglich ist zwischen mindestens:
∘ einer normalen Betriebsposition, die dem Betriebszustand entspricht, bei dem der zusätzliche Kanal (11) unter Druck gesetzt wird und das Magnetventil (13) in der aktiven Konfiguration ist, und bei dem sich das Aktivierungselement selbst im Gegensatz zu der durch die elastischen Mittel (19) ausgeübten Kraft bewegt und mit den ersten Ventilmitteln (9) zusammenwirkt, um den Bremskanal (6) mit dem Steuerkanal (5) in Verbindung zu bringen, wobei der letztere den Speicher über den Hilfskanal (20) mit den zweiten Ventilmitteln (29) in der geschlossenen Position versorgt;
∘ und einer Notposition, die dem Betriebszustand entspricht, bei dem ein Druckabfall in dem zusätzlichen Kanal (11) oder der Verbindung des letzteren mit dem Auslasskanal (12) als Folge des Austritts des zweiten männlichen Verbindungsstücks aus seinem zweiten weiblichen Verbindungsstück oder der Verschiebung des Magnetventils (13) in die inaktive Position erfolgt, und wobei das Aktivierungselement selbst mit den zweiten Ventilmitteln (29) zusammenwirkt, um den Abfluss des Arbeitsfluids aus dem Speicher in den Zuführkanal (7) und von dort in den Bremskanal (6) durch den Verbindungskanal (22) zu ermöglichen, und wobei die ersten Ventilmittel (9) in der geschlossenen Position sind, das den Steuerkanal (5) vom Bremskanal (6) trennt.

2. Ventilbaugruppe (1) nach Anspruch 1, **dadurch gekennzeichnet, dass** sich beim Übergang von der Notposition in die normale Betriebsposition des Aktivierungselements (15) sowohl die ersten als auch die zweiten Ventilmittel (9, 29) in der geschlossenen Position befinden.

3. Ventilbaugruppe (1) nach Anspruch 1 oder 2, **dadurch gekennzeichnet, dass** sie mindestens ein erstes Interaktionselement (30) umfasst, das zwischen dem Aktivierungselement (15) und den ersten Ventilmitteln (9) angeordnet ist, wobei das Aktivierungselement (15) in der Verschiebung in die normale Betriebsposition in der Lage ist, das erste Interaktionselement (30) in Richtung der ersten Ventilmittel (9) zu schieben, um die letzteren in die offene Position zu bewegen.

4. Ventilbaugruppe (1) nach einem oder mehreren der vorhergehenden Ansprüche, **dadurch gekennzeichnet, dass** sie mindestens ein zweites Interaktionselement (31) umfasst, das zwischen dem Aktivierungselement (15) und den zweiten Ventilmitteln (29) angeordnet ist, wobei das Aktivierungselement (15) in der Verschiebung in die Notposition in der Lage ist, das zweite Interaktionselement (31) in Richtung der zweiten Ventilmittel (29) zu drücken, um die letzteren in die offene Position zu bewegen.

5. Ventilbaugruppe (1) nach den Ansprüchen 3 und 4, **dadurch gekennzeichnet, dass**, wenn das Aktivierungselement (15) an einem der ersten und zweiten Interaktionselemente (30, 31) anliegt, es von dem anderen des zweiten und des ersten Interaktionselements (31, 30) beabstandet ist.

6. Ventilbaugruppe (1) nach einem oder mehreren der vorhergehenden Ansprüche, **dadurch gekennzeichnet, dass** die ersten Ventilmittel (9) mindestens einen ersten und einen zweiten Verschluss (9a, 9b) umfassen, die in der Lage sind, jeweils einen ersten und einen zweiten Durchlasskanal (16a, 16b) des Arbeitsfluids entlang des Verbindungskanals (16) zu blockieren, wobei das Aktivierungselement (15) in der Lage ist, den ersten und zweiten Verschluss (9a, 9b) nacheinander in ihre jeweiligen offenen Positionen zu bewegen, während der Verschiebung hiervon in die normale Betriebsposition.

7. Ventilbaugruppe (1) nach Anspruch 6, **dadurch gekennzeichnet, dass** der erste Verschluss (9a) verschiebbar in den zweiten Verschluss (9b) eingesetzt ist, wobei der letztere hohl ist und den ersten Durchlasskanal (16a) definiert, und in seiner geschlossenen Position von der Oberseite des zweiten Verschlusses selbst vorsteht, wobei das erste Interaktionselement (30) in der Lage ist, den ersten und den zweiten Verschluss (9a, 9b) während der Verschiebung des Aktivierungselements (15) in Richtung der normalen Betriebsposition nacheinander zu kontaktieren.

8. Ventilbaugruppe (1) nach einem oder mehreren der vorhergehenden Ansprüche 6 und 7, **dadurch gekennzeichnet, dass** der zweite Verschluss (9b) in seiner geschlossenen Position gegen den Körper (2) anliegt, wobei der zweite Durchlasskanal (16b) außerhalb des ersten Durchlasskanals (16a) angeordnet ist.

9. Ventilbaugruppe (1) nach einem oder mehreren der vorhergehenden Ansprüche, **dadurch gekennzeichnet, dass** das Aktivierungselement (15) ein erstes Schubelement (15a) mit einer Glasform umfasst, das mit dem zweiten Interaktionselement (31) zusammenwirken kann, und ein zweites Schubelement (15b), das in dem ersten Schubelement (15a) untergebracht ist und mit dem ersten Interaktionselement (30) zusammenwirken kann, wobei die elastischen Mittel (19) zwischen dem ersten und dem zweiten Schubelement (15a, 15b) angeordnet ist.

10. Ventilbaugruppe (1) nach einem oder mehreren der vorhergehenden Ansprüche, **dadurch gekennzeichnet, dass** sie manuelle Befehlsmittel (24) umfasst, die bedienbar sind, um die Verschiebung des Aktivierungselements (15) in mindestens eine vordefinierte Position innerhalb des Sitzes (4) zu befehlen.

11. Ventilbaugruppe (1) nach Anspruch 10, **dadurch gekennzeichnet, dass** die Befehlsmittel (24) zwischen einer neutralen Position, in der sich das Aktivierungselement (15) frei zwischen der normalen Betriebsposition und der Notposition bewegen kann, und mindestens einer ersten Arbeitsposition, in der das Aktivierungselement (15) ausgehend von der Notposition im Gegensatz zu den elastischen Mitteln (19) gedrückt wird, und in der sich die ersten und zweiten Ventilmittel (9, 29) in der geschlossenen Position befinden, beweglich sind.

12. Ventilbaugruppe (1) nach Anspruch 11, **dadurch gekennzeichnet, dass** sie Pumpmittel (25) umfasst, die entlang des Hilfskanals (20) angeordnet und mit den Befehlsmitteln (24) in der ersten Arbeitsposition bedienbar sind, um das Arbeitsfluid in den Steuerkanal (5) zu saugen und an den Speicher zu senden; wobei die Pumpmittel (25) auch in der Lage sind, das Arbeitsfluid in den zusätzlichen Kanal (11) zu saugen, falls dieser als Folge des Austritts des zweiten männlichen Verbindungsstücks aus seinem zweiten weiblichen Verbindungsstück mit dem Auslasskanal (12) in Verbindung gebracht wird, wobei der Auslasskanal (12) mit dem Steuerkanal (5) in Verbindung steht.

13. Ventilbaugruppe (1) nach einem oder mehreren der Ansprüche 10 bis 12, **dadurch gekennzeichnet, dass** die Befehlsmittel (24) auch in eine zweite Arbeitsposition beweglich sind, wobei das Aktivierungselement (15) im Gegensatz zu den elastischen Mitteln (19) in Bezug auf die erste Arbeitsposition weitergeschoben wird und die ersten Ventilmittel (9) in der geöffneten Position sind.

14. Ventilbaugruppe (1) nach Anspruch 13, **dadurch gekennzeichnet, dass** die Pumpmittel (25) mit den Befehlsmitteln (24) in der zweiten Arbeitsposition bedienbar sind, um das Arbeitsfluid entlang des Bremskanals (6) mittels des Steuerkanals (5) zu saugen und an den Speicher zu senden.

15. Ventilbaugruppe (1) nach einem oder mehreren der vorhergehenden Ansprüche 10 bis 14, **dadurch gekennzeichnet, dass** die Befehlsmittel (24) mindestens ein Aktivierungselement (26) umfassen, das außerhalb des Körpers (2) angeordnet ist, der mit einem Nockenelement (27) verbunden ist, das mit dem Aktivierungselement (15) zusammenwirkt und bedienbar ist, um die Befehlsmittel selbst aus der neutralen Position in mindestens eine der Arbeitspositionen und umgekehrt zu bewegen.

## Revendications

1. Ensemble de vanne (1), en particulier pour des remorques comprenant un premier et un second joints femelles pouvant être raccordés à un premier et à un second joints mâles respectivement, associés au véhicule de remorquage, où le premier joint femelle communique avec une ligne de commande du système de freinage de la remorque elle-même et où le second joint femelle communique avec au moins une ligne supplémentaire agissant sur le frein de stationnement et/ou le frein automatique de la remorque, l'ensemble de vanne comprenant au moins une ligne de dérivation communiquant avec une ligne d'évacuation, et des moyens de vanne aptes à placer la ligne supplémentaire en communication avec la ligne de dérivation suite à la sortie du second joint mâle du second joint femelle, **caractérisé en ce qu'**il comprend :
- un corps (2) dans lequel sont définis :
- au moins un canal de commande (5) pouvant être raccordé à ladite ligne de commande de la remorque ;
- au moins un canal de freinage (6), pouvant être raccordé au système de freinage de la remorque ;
- au moins un canal de raccordement (16) interposé entre ledit canal de commande (5) et ledit canal de freinage (6) et le long duquel sont placés des premiers moyens de vanne (9) pour permettre/empêcher l'écoulement du fluide de travail le long du canal de raccordement lui-même ;
- au moins un canal d'alimentation (7) raccordé à un accumulateur hydraulique, des seconds moyens de vanne (29) étant prévus pour placer en communication/isoler ledit canal d'alimentation (7) avec ledit/dudit accumulateur ;
- au moins un canal de raccordement (22) pour placer ledit canal d'alimentation (7) en communication avec ledit canal de freinage (6) ;
- au moins un canal auxiliaire (20) pour placer ledit canal de commande (5) en communication avec ledit accumulateur et le long duquel sont agencés des moyens de vanne à une voie (21) pour empêcher l'écoulement de fluide de l'accumulateur vers le canal de commande lui-même ;
- au moins un canal supplémentaire (11) pouvant être raccordé à ladite ligne supplémentaire de la remorque ;
- au moins un canal d'évacuation (12) pouvant être raccordé à ladite ligne d'évacuation de la remorque ;
- au moins un élément d'activation (15) logé de manière coulissante dans un siège (4) défini dans ledit corps (2), interposé entre lesdits premiers et seconds moyens de vanne (9, 29) et sur lequel agissent, sur des côtés opposés de celui-ci, au moins une première chambre de poussée (17) faisant face au côté desdits seconds moyens de vanne (29) et une seconde chambre de poussée (18) faisant face au côté desdits premiers moyens de vanne (9), des moyens élastiques (19) sont aussi prévus de manière à être aptes à agir sur l'élément d'activation pour le pousser vers ladite première chambre de poussée (17), lesdites première et seconde chambres de poussée (17, 18) pouvant être raccordées à au moins un parmi ledit canal supplémentaire (11) et ledit canal d'évacuation (12) ;
- au moins une vanne solénoïde (13) pouvant être raccordée à l'alimentation électrique du véhicule de remorquage et raccordée audit canal supplémentaire (11), audit canal d'évacuation (12) et auxdites première et seconde chambres de poussée (17, 18), ladite vanne solénoïde (13) étant mobile entre au moins une configuration inactive, dans laquelle lesdites première et seconde chambres de poussée (17, 18) communiquent l'une avec l'autre, et au moins une configuration active, dans laquelle ladite première chambre de poussée (17) communique avec ledit canal supplémentaire (11) et ladite seconde chambre de poussée (18) communique avec ledit canal d'évacuation (12) ;
- ledit élément d'activation (15) étant mobile entre au moins :
- une position opérationnelle normale, correspondant à la condition opérationnelle dans laquelle ledit canal supplémentaire (11) est mis sous pression et ladite vanne solénoïde (13) est dans la configuration active, et dans laquelle l'élément d'activation lui-même se déplace de manière contraire à la force exercée par lesdits moyens élastiques (19) et interagit avec lesdits premiers moyens de vanne (9) pour placer ledit canal de freinage (6) en communication avec ledit canal de commande (5), ce dernier alimentant ledit accumulateur au moyen dudit canal auxiliaire (20) avec lesdits seconds moyens de vanne (29) dans la position fermée ;
- et une position d'urgence, correspondant à la condition opérationnelle dans laquelle a lieu une chute de pression dans ledit canal supplémentaire (11) ou le raccordement de ce dernier avec ledit canal d'évacuation (12) suite à la sortie du second joint mâle de son second joint femelle ou du déplacement de ladite vanne solénoïde (13) à la position inactive, et dans laquelle l'élément d'activation lui-même interagit avec lesdits seconds moyens de vanne (29) pour permettre l'écoulement en sortie du fluide de travail dudit accumulateur audit canal d'alimentation (7) et de là audit canal de freinage (6) au travers dudit canal de raccordement (22), et dans lequel lesdits premiers moyens de vanne (9) sont dans la position fermée isolant ledit canal de commande (5) dudit canal de freinage (6).

2. Ensemble de vanne (1) selon la revendication 1, **caractérisé en ce que** dans le passage de la position d'urgence à la position opérationnelle normale dudit élément d'activation (15) à la fois les premiers et seconds moyens de vanne (9, 29) sont dans la position fermée.

3. Ensemble de vanne (1) selon la revendication 1 ou 2, **caractérisé en ce qu'**il comprend au moins un premier élément d'interaction (30) interposé entre ledit élément d'activation (15) et lesdits premiers moyens de vanne (9), ledit élément d'activation (15), dans le déplacement vers la position opérationnelle normale, étant apte à pousser ledit premier élément d'interaction (30) vers lesdits premiers moyens de vanne (9) pour déplacer ces derniers à la position ouverte.

4. Ensemble de vanne (1) selon l'une ou plusieurs des revendications précédentes, **caractérisé en ce qu'**il comprend au moins un second élément d'interaction (31) interposé entre ledit élément d'activation (15) et lesdits seconds moyens de vanne (29), ledit élément d'activation (15), dans le déplacement à la position d'urgence, étant apte à pousser ledit second élément d'interaction (31) vers les seconds moyens de vanne (29) pour déplacer ces derniers à la position ouverte.

5. Ensemble de vanne (1) selon les revendications 3 et 4, **caractérisé en ce que** lorsque ledit élément d'activation (15) repose contre un desdits premiers et desdits seconds éléments d'interaction (30, 31) il est espacé de l'autre dudit second et dudit premier élément d'interaction (31, 30).

6. Ensemble de vanne (1) selon l'une ou plusieurs des revendications précédentes, **caractérisé en ce que** lesdits premiers moyens de vanne (9) comprennent au moins un premier et un second obturateur (9a, 9b) aptes à obstruer un premier et un second canal de passage (16a, 16b) respectivement, du fluide de travail le long dudit canal de raccordement (16), ledit élément d'activation (15) étant apte à déplacer en séquence lesdits premier et second obturateurs (9a, 9b) à leurs positions ouvertes respectives pendant le déplacement de celui-ci à la position opérationnelle normale.

7. Ensemble de vanne (1) selon la revendication 6, **caractérisé en ce que** ledit premier obturateur (9a) est inséré de manière coulissante dans ledit second obturateur (9b), ce dernier étant creux et définissant ledit premier canal de passage (16a), et fait saillie, dans sa position fermée, du dessus du second obturateur lui-même, ledit premier élément d'interaction (30) étant apte à toucher, en séquence, ledit premier et ledit second obturateur (9a, 9b) pendant le déplacement de l'élément d'activation (15) vers la position opérationnelle normale.

8. Ensemble de vanne (1) selon l'une ou plusieurs des revendications précédentes 6 et 7, **caractérisé en ce que** ledit second obturateur (9b) repose, dans sa position fermée, contre ledit corps (2), ledit second canal de passage (16b) étant positionné en dehors dudit premier canal de passage (16a).

9. Ensemble de vanne (1) selon l'une ou plusieurs des revendications précédentes, **caractérisé en ce que** ledit élément d'activation (15) comprend un premier élément de poussée (15a), avec une forme de verre et apte à coopérer avec ledit second élément d'interaction (31), et un second élément de poussée (15b) logé dans ledit premier élément de poussée (15a) et apte à coopérer avec ledit premier élément d'interaction (30), lesdits moyens élastiques (19) étant interposés entre ledit premier et ledit second élément de poussée (15a, 15b).

10. Ensemble de vanne (1) selon l'une ou plusieurs des revendications précédentes, **caractérisé en ce qu'**il comprend des moyens de commande manuels (24) actionnables pour commander le déplacement dudit élément d'activation (15) dans au moins une position prédéfinie dans ledit siège (4).

11. Ensemble de vanne (1) selon la revendication 10, **caractérisé en ce que** lesdits moyens de commande (24) sont mobiles entre une position neutre, dans laquelle ledit élément d'activation (15) est libre de se déplacer entre ladite position opérationnelle normale et ladite position d'urgence, et au moins une première position de travail dans laquelle, à partir de la position d'urgence, ledit élément d'activation (15) est poussé de manière contraire auxdits moyens élastiques (19), et dans lequel lesdits premiers et lesdits seconds moyens de vanne (9, 29) sont dans la position fermée.

12. Ensemble de vanne (1) selon la revendication 11, **caractérisé en ce qu'**il comprend des moyens de pompage (25) positionnés le long dudit canal auxiliaire (20) et actionnables, avec lesdits moyens de commande (24) dans la première position de travail, pour aspirer le fluide de travail dans ledit canal de commande (5) et pour l'envoyer audit accumulateur ; lesdits moyens de pompage (25) étant aussi aptes à aspirer le fluide de travail dans ledit canal supplémentaire (11) au cas où ce dernier est placé en communication avec ledit canal d'évacuation (12) suite à la sortie du second joint mâle de son second joint femelle, ledit canal d'évacuation (12) étant en communication avec ledit canal de commande (5).

13. Ensemble de vanne (1) selon l'une ou plusieurs des revendications 10 à 12, **caractérisé en ce que** lesdits moyens de commande (24) sont aussi mobiles vers une seconde position de travail, dans laquelle ledit élément d'activation (15) est poussé davantage de manière contraire auxdits moyens élastiques (19) par rapport à ladite première position de travail et lesdits premiers moyens de vanne (9) sont dans la position ouverte.

14. Ensemble de vanne (1) selon la revendication 13, **caractérisé en ce que**, avec lesdits moyens de commande (24) dans la seconde position de travail, lesdits moyens de pompage (25) sont actionnables pour aspirer le fluide de travail le long dudit canal de freinage (6) au moyen dudit canal de commande (5) et pour l'envoyer audit accumulateur.

15. Ensemble de vanne (1) selon l'une ou plusieurs des revendications précédentes 10 à 14, **caractérisé en ce que** lesdits moyens de commande (24) comprennent au moins un élément d'actionnement (26) positionné en dehors dudit corps (2), raccordé à un élément à came (27) interagissant avec ledit élément d'activation (15) et actionnable pour déplacer les moyens de commande eux-mêmes de la position neutre à au moins une desdites positions de travail et vice versa.
